# EUROPEAN PATENT APPLICATION

(11) **EP 3 839 727 A1**
(43) Date of publication of application: **23.06.2021**
(21) Application number: 19216748.4
(22) Date of filing: 16.12.2019
(51) Int. Cl.: G06F 8/71, G06F 11/00, G06F 11/36, G06N 20/00

(54) **MULTI-MODEL CODE MANAGEMENT**

(71) Applicant: British Telecommunications public limited company, London EC1A 7AJ (GB)
(72) Inventor: Noppen, Johannes, London EC4V 5BT (GB); Cormick, Alistair, London EC4V 5BT (GB); Ziolkowski, Adam, London EC4V 5BT (GB); Ferreyra Olivaries, Emmanuel, London EC4V 5BT (GB); Ali, Aftab, London EC4V 5BT (GB); Abu-Tair, Mamun, London EC4V 5BT (GB); McClean, Sally, London EC4V 5BT (GB)
(74) Representative: British Telecommunications public limited company Intellectual Property Department

(57) **Abstract**

A computer implemented method of updating software code in a code management system, the code management system storing version-controlled software code including a current version and a plurality of historic versions of the code, each version of the software code having a codebase comprising a plurality of software modules and having associated codebase characteristics including one or more metrics for the codebase and one or more indications of a performance of the code in the codebase, the method comprising: training each of a plurality of mathematical prediction models for a codebase for each version of the software code, and based on the one or more metrics of the codebase, to predict performance indications of a codebase; receiving a modification for the current version of the software code comprising an indication of changes to one or more modules in the codebase of the current version; generating a new codebase as a candidate codebase based on a combination of a codebase for the current version and the received modification; processing the candidate codebase by each of the plurality of prediction models to generate a plurality of predictions for one or more performance indications for the candidate codebase; comparing the generated predictions to identify common predictions arising from different ones of the prediction models for the candidate codebase; and responsive to identified common predictions, committing the modification for the current version to the code management system as part of a new version of the software code.

## Description

The present invention relates to the management of software code and, in particular, to the modification of software code in a version-controlled code management system.

Software development or generation is increasingly a progressive task involving the generation of multiple versions of software over time. The management of code such as source code, scripts, makefiles, build scripts, metadata, resource files, specifications, configuration files, media and the like, requires a version-controlled code management system. Utilising such a system, versions of a software component such as an application, product or the like, can be generated based on a determined state of the software code.

Changes to software code can be made by software engineers, automated software generators, automated coding or artificial intelligence. Such changes can include addition, deletion or modification to code within the version-controlled code management system.

Performance of software depends on the suitability, accuracy, efficiency and correctness of the code constituting the software. Performance can include, for example, a degree of efficacy of software, an error rate, an efficiency of software (in terms of, e.g., inter alia, speed of execution and/or efficiency of computer resource usage), and other performance measures as will be apparent to those skilled in the art.

It is desirable to provide for the inclusion of changes to software code in a version-controlled code management system while detecting, predicting and/or recognising an impact on performance of software.

According to a first aspect of the present invention, there is provided a computer implemented method of updating software code in a code management system, the code management system storing version-controlled software code including a current version and a plurality of historic versions of the code, each version of the software code having a codebase comprising a plurality of software modules and having associated codebase characteristics including one or more metrics for the codebase and one or more indications of a performance of the code in the codebase, the method comprising: training each of a plurality of mathematical prediction models for a codebase for each version of the software code, and based on the one or more metrics of the codebase, to predict performance indications of a codebase; receiving a modification for the current version of the software code comprising an indication of changes to one or more modules in the codebase of the current version; generating a new codebase as a candidate codebase based on a combination of a codebase for the current version and the received modification; processing the candidate codebase by each of the plurality of prediction models to generate a plurality of predictions for one or more performance indications for the candidate codebase; comparing the generated predictions to identify common predictions arising from different ones of the prediction models for the candidate codebase; and responsive to identified common predictions, committing the modification for the current version to the code management system as part of a new version of the software code.

Preferably, the one or more metrics for a codebase include one or more of: a cyclometric complexity for the codebase; a degree of replication of code in the codebase; a measure of conformance with one or more coding standards by code in the codebase; an extent to which code in the codebase is covered by software tests for the codebase; and a measure of Halstead complexity for the codebase.

Preferably, the one or more indications of a performance of the code in a codebase include one or more of: a measure of a number of build warnings and/or errors for the codebase when subjected to a build process to compile and link code in the codebase; a measure of a number of runtime warnings and/or errors for software in execution being built from code in the codebase; a measure of seriousness of warnings and/or errors when subjected to a build process to compile and link code in the codebase; and a measure of seriousness of warnings and/or errors for software in execution being built from code in the codebase.

Preferably, the modification is received from an automated code generation facility.

Preferably, the method further comprises, responsive to identified common predictions: identifying one or more software modules changed by the received modification; and inserting or configuring a monitoring component for use in or with the new version of the software code to monitor performance of the identified changed software modules in execution of software built from a codebase for the new version.

Preferably, the method further comprises, responsive to identified common predictions: identifying one or more software modules changed by the received modification; and providing or activating test software components to test the identified changed software modules.

According to a second aspect of the present invention, there is a provided a computer system including a processor and memory storing computer program code for performing the steps of the method set out above.

According to a third aspect of the present invention, there is a provided a computer system including a processor and memory storing computer program code for performing the steps of the method set out above.

Embodiments of the present invention will now be described, by way of example only, with reference to the accompanying drawings, in which:
Figure 1 is a block diagram a computer system suitable for the operation of embodiments of the present invention;
Figure 2 is a component diagram of a code reviewer for use with a code management system for the management of version-controlled software code in accordance with a first embodiment of the present invention;
Figure 3 is a flowchart of a method of updating software code in a code management system in accordance with the first embodiment of the present invention;
Figure 4 is a component diagram of a code reviewer for use with a code management system for the management of version-controlled software code in accordance with a second embodiment of the present invention;
Figure 5 is a flowchart of a method of updating software code in a code management system in accordance with the second embodiment of the present invention;
Figure 6 is a component diagram of a code reviewer for use with a code management system for the management of version-controlled software code in accordance with a third embodiment of the present invention;
Figure 7 is a flowchart of a method of updating software code in a code management system in accordance with the third embodiment of the present invention;
Figure 8 is a component diagram of a code reviewer for use with a code management system for the management of version-controlled software code in accordance with a fourth embodiment of the present invention; and
Figure 9 is a flowchart of a method of updating software code in a code management system in accordance with the fourth embodiment of the present invention.

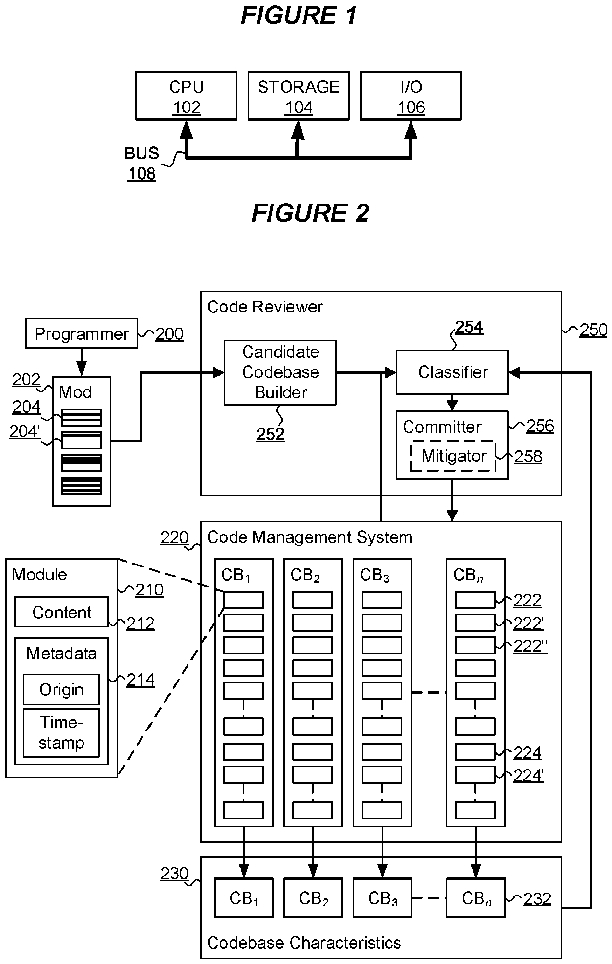

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of a code reviewer 250 for use with a code management system 220 for the management of version-controlled software code in accordance with a first embodiment of the present invention. The code management system 220 is a software facility providing version-controlled storage and management of software code. For example, software code stored in the code management system 220 is code for a software application including software modules such as inter alia: source code; scripts; libraries; makefiles; build scripts; metadata; resource files; specifications; configuration files; and media. The code management system stores a plurality of versions of the code each having a codebase as a set of files, objects or other software components. Thus, code management system 220 includes multiple versions of software code including a plurality of historic versions (e.g. CB₁ to CB₃) and a current version (e.g. CB*ₙ*).

Each codebase includes software modules 222, 222', 222" etc. An exploded view of a module 210 is depicted by way of example only and includes content 212 such as software code, and optionally metadata 214 such as an indication of an origin of the module (e.g. a programmer or programming component) and a timestamp of the module such as one or more of: a creation date/time; and one or more modification dates/times.

Also included in each codebase CB₁ to CB*ₙ* is a suite of tests 224, 224' etc. Each of the tests 224, 224' etc. is a software component operable to test software, such as software in execution, for performance of the software and, accordingly, serves to generate one or more indications of performance of the code. Indications of performance of a codebase for a version of the software code can be determined based on the tests 224, 224' etc., and/or by extrinsically or intrinsically determined facilities such as other software components external to the code management system 220 but having access to the code management system 220 (not illustrated). Thus, codebase characteristics 230 are provided for each codebase in the code management system 220. Each set of codebase characteristics 232 includes one or more metrics for a particular codebase and one or more indications of performance of the codebase. Metrics for a codebase can include one or more of: a cyclometric complexity for the codebase; a degree of replication of code in the codebase; a measure of conformance with one or more coding standards by code in the codebase; an extent to which code in the codebase is covered by software tests for the codebase; and a measure of Halstead complexity for the codebase.

Indications of a performance of the code in a codebase include one or more of: a measure of a number of build warnings and/or errors for the codebase when subjected to a build process to compile and link code in the codebase; a measure of a number of runtime warnings and/or errors for software in execution being built from code in the codebase; a measure of seriousness of warnings and/or errors when subjected to a build process to compile and link code in the codebase; and a measure of seriousness of warnings and/or errors for software in execution being built from code in the codebase.

A code reviewer 250 is provided as a software, hardware, firmware or combination component for reviewing a proposed modification 202 to a codebase CB*ₙ* for a current version of the software code in the code management system 220. The modification 202 originates from a programmer 200 such as an automated code generation facility, an artificial intelligence software programmer or a software engineer, and includes one or more changes to one or more modules 204, 204' etc. The code reviewer 250 includes a classifier 254 as a machine learning component suitable for generating a classification as an output based on an input set of parameters. For example, the classifier 254 is implemented as a neural network or support vector machine. In use, the classifier 254 is trained based on a codebase for each version of the software code in the code management system 220. In particular, the classifier 254 is trained by the metrics of each codebase to classify a codebase according to one or more performance indications. In this way, a codebase can be classified to one or more performance indications by the trained classifier 254.

The code reviewer 250 further includes a candidate codebase builder 252 as a software, hardware, firmware or combination component for generating a new codebase as a candidate codebase for prospective inclusion in the code management system 220 as a new version of the software code. The candidate codebase is based on a codebase CB*ₙ* for a current version of the software code in the code management system 220 with the modifications 202 applied to it. Thus, the candidate codebase constitutes a codebase for a new version of the code were the modifications to be implemented.

In use, the candidate codebase is processed by the trained classifier 254 to classify the candidate codebase to performance indications. In this way, indications of the candidate codebase including, for example, inter alia: an indication of a likelihood or number of runtime warnings and/or errors for software in execution being built from code in the candidate codebase; a measure of seriousness of warnings and/or errors when subjected to a build process to compile and link code in the candidate codebase; and a measure of seriousness of warnings and/or errors for software in execution being built from code in the candidate codebase.

The code reviewer 250 further includes a committer component as a hardware, software, firmware or combination component responsive to a classification by the classifier 254 of the candidate codebase. The committer 256 determines whether the classified indication(s) of performance of the candidate codebase are acceptable for committing the modifications to the code management system such that the candidate codebase becomes a codebase for a new version of the software code in the code management system. The determination of the committer 256 can be based on, for example, threshold number of likehood of defects, errors, warnings or other performance indications.

In some embodiments, the committer 256 further includes a mitigator component 258 for, when a candidate codebase is committed as a new version of the software code, providing mitigation measures for the new version of the software code to mitigate the effect of any performance indications identified by the classifier. For example, mitigation can include identifying software modules changed by the received modification 202 and: inserting or configuring a monitoring component for use in or with the new version of the software code to monitor performance of the identified changed software modules in execution of software built from a codebase for the new version; and/or providing or activating test software components to test the identified changed software modules. Thus, in this way, monitoring and control facilities can be provided or such facilities can be more enhanced, more targeted, or more effective where performance indications so occasion.

It is to be recognised that one beneficial effect of the committer 256 is the determination that the modification should not be effected in the code management system 220 as a means of protecting the code in the code management system where it is determined that the performance is not as required.

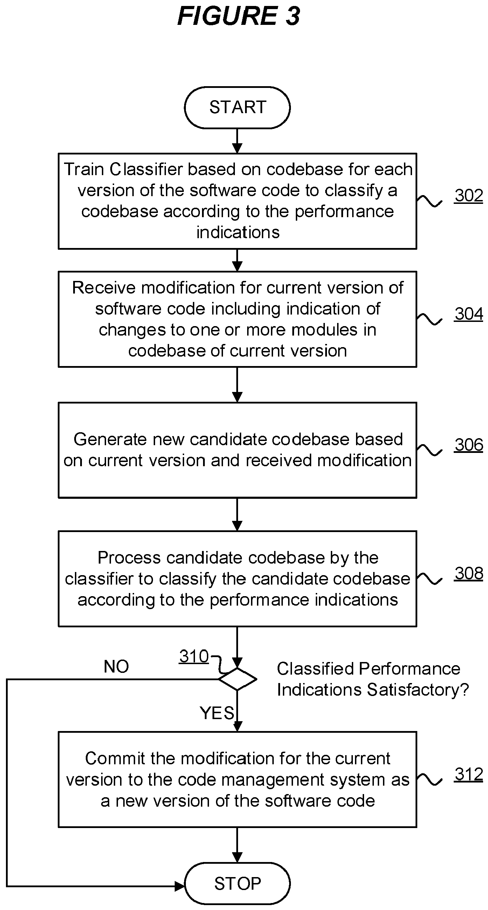

Figure 3 is a flowchart of a method of updating software code in a code management system 220 in accordance with the first embodiment of the present invention. Initially, at step 302, the method trains a classifier 254 based on a codebase for each version of the software code to classify a codebase, based on the one or more metrics of the codebase, according to the performance indications. At step 304 the method receives a modification for a current version of the software code comprising an indication of changes to one or more modules in the codebase of the current version. At step 306 the method generates a new codebase as a candidate codebase based on a combination of a codebase for the current version and the received modification. At step 308 the candidate codebase is processed by the trained classifier 254 to classify the candidate codebase according to the performance indications. Where the classification identifies a satisfactory performance with reference, for example, to threshold performance criteria, the method proceeds to step 312 where the modification for the current version is committed to the code management system as part of a new version of the software code.

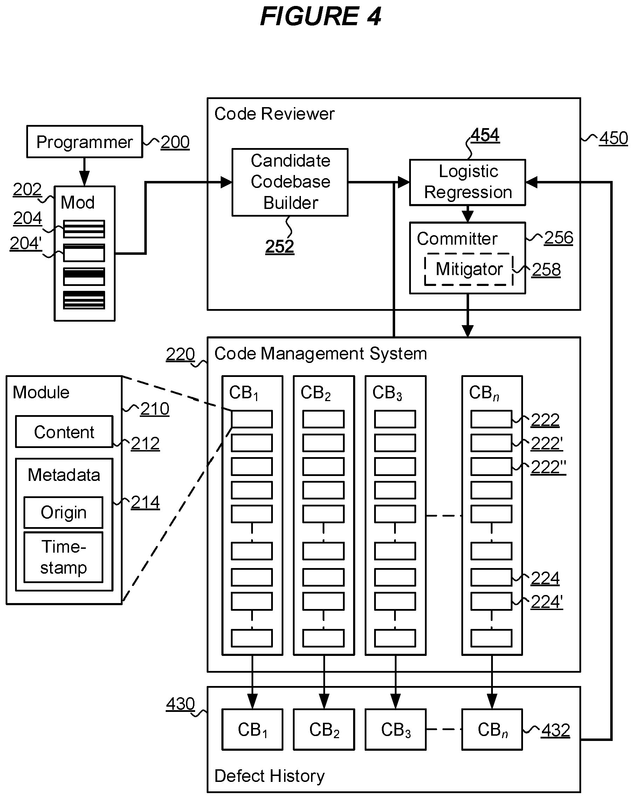

Figure 4 is a component diagram of a code reviewer 450 for use with a code management system 220 for the management of version-controlled software code in accordance with a second embodiment of the present invention. Many of the elements of Figure 4 are identical to those described above with respect to Figure 2 and these will not be repeated here. Figure 4 differs from Figure 2 in that a defect history 430 is provided including a historical record of defects identified in a codebase for each version of the software code in the code management system 220. Defects can include compile time, link time, or execution time warnings, errors or failures that may arise due to logical, programming or application errors. For example, an error at execution time can include a failure to ensure availability of one or more subroutines, functions or data items within an executing application - such a failure constituting a failure of logic and correctness of the code. Alternatively, a error at execution time can include a failure to conform to a software specification such that the software in execution is not compliant with its design or specification. Thus, the defect history 430 records defects across all codebases in the code management system 220.

The code reviewer 450 of Figure 4 includes a logistic regression component 454 for generating a logistic model for predicting the likelihood of a defect in a codebase based on metrics for the codebase (as previously described) and the indications of defects in the defect history 430 for the codebase. As will be apparent to those skilled in the art, a logistic regression can be used to generate the logistic model.

Subsequently, the candidate codebase generated by the candidate codebase builder 252 is processed by the logistic regression component 454 by applying the logistic model to the candidate codebase to predict a likelihood of a defect in the candidate codebase. The committer 256 is then responsive to the prediction such that a prediction of a satisfactory defect, number of defects, or type of defect can result in committing the modification to the current version in the code management system 220.

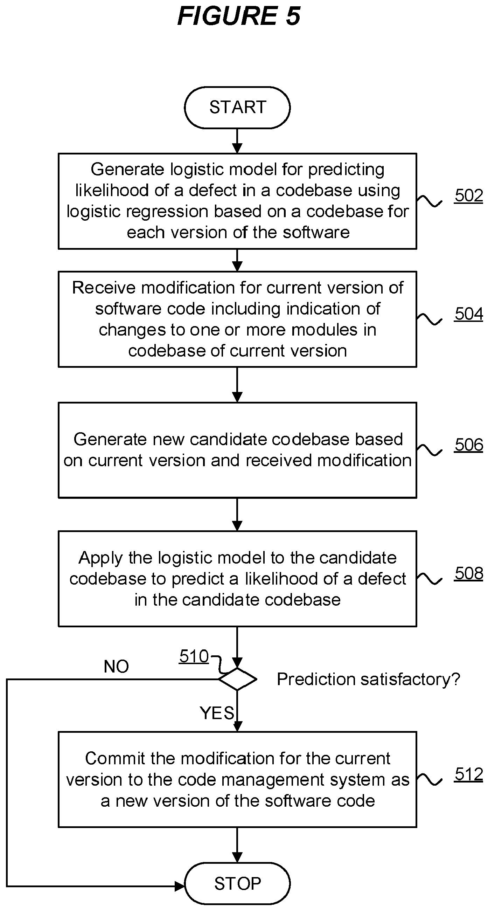

Figure 5 is a flowchart of a method of updating software code in a code management system 220 in accordance with the second embodiment of the present invention. Initially, at step 502, the method generates a logistic model for predicting a likelihood of a defect in a codebase based on the metrics for the codebase, the logistic model being generated using logistic regression based on the codebase characteristics of a codebase for each version of the software code. At step 504 the method receives a modification for the current version of the software code comprising an indication of changes to one or more modules in the codebase of the current version. At step 506 the method generates a new codebase as a candidate codebase based on a combination of a codebase for the current version and the received modification. At step 508 the method applies the logistic model to the candidate codebase to predict a likelihood of a defect in the candidate codebase. Responsive to a determination of the acceptability of the prediction at step 510, the method proceeds to step 512 where the method commits the modification for the current version to the code management system as part of a new version of the software code.

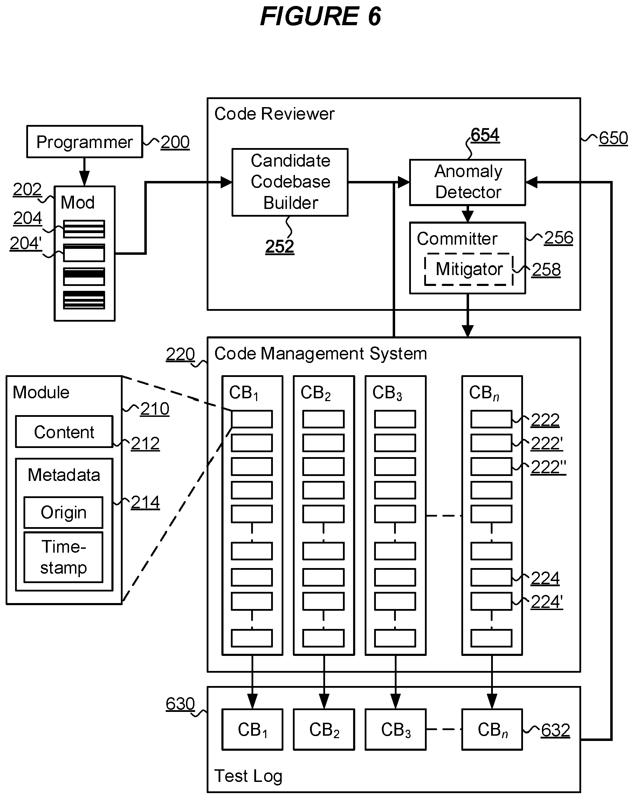

Figure 6 is a component diagram of a code reviewer 650 for use with a code management system 220 for the management of version-controlled software code in accordance with a third embodiment of the present invention. Many of the elements of Figure 6 are identical to those described above with respect to Figure 2 and these will not be repeated here.

Associated with a codebase for each version of software code in the code management system 220 of Figure 6 is test log information 630 including logging output generated by one or more executable tests run against, for, with or in conjunction with a codebase. For example, test log information 630 can be logging output from tests executed to operate with a software application built from a particular codebase. Alternatively, or additionally, test log information 630 can be logging output from tests executed directly on a codebase itself. The test log information is preferably a structured data file or files including indications of efficacy, defects, successes and failures of a test subject such as executing program or codebase code.

The code reviewer 650 of Figure 6 includes an anomaly detector component 654 such as an algorithm for identifying outliers including any one or combination of, inter alia, for example: density-based algorithms such as k-nearest neighbour, local outlier factor isolation forests; subspace-, correlation-based and tensor-based outlier detection ; support vector machines such as one-class support vector machines; replicator neural networks; autoencoders; long short-term memory neural networks; Bayesian networks; hidden Markov models; cluster analysis-based outlier detection; and fuzzy logic-based outlier detection.

The anomaly detector 654 is trained or pre-configured based on test log(s) for a codebase for each version of the software code in the code management system 220. Additionally, test log(s) for the candidate codebase are also processed by the anomaly detector 654 to determine if the candidate codebase log(s) constitute an outlier or anomaly among all other codebases in the code management system 220. Thus, the candidate codebase 252 is built as a software application with associated test modules for execution such that the test modules can be executed to generate test log(s) for the candidate codebase.

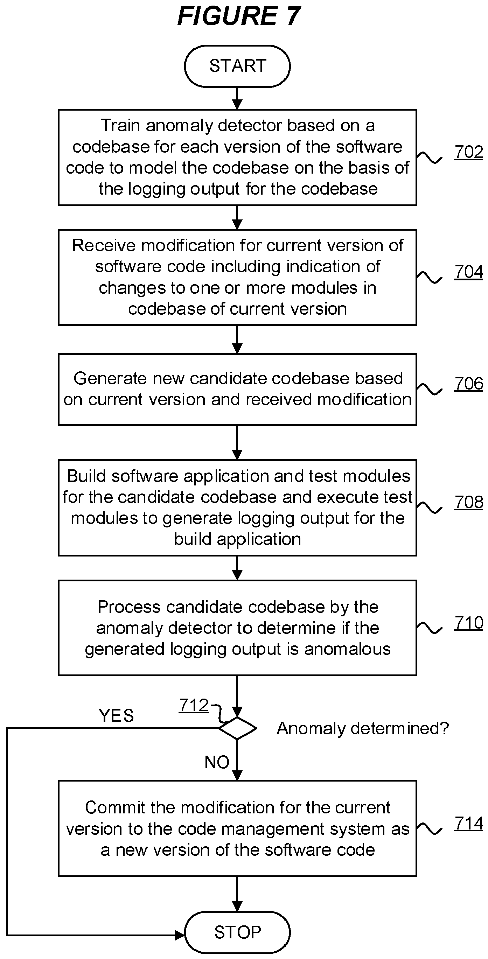

Figure 7 is a flowchart of a method of updating software code in a code management system 220 in accordance with the third embodiment of the present invention. Initially, at step 702, the anomaly detector is trained based on a codebase for each version of the software code to model the codebase on the basis of the logging output associated with the codebase. At step 704 the method receives a modification for the current version of the software code comprising an indication of changes to one or more modules in the codebase of the current version. At step 706 the method generates a new codebase as a candidate codebase based on a combination of a codebase for the current version and the received modification. At step 708 the method builds a software application and test modules for the candidate codebase and executes the test modules to generate logging output for the built software application. At step 710 the method processes the generated logging output for the built software application by the anomaly detector to determine if the generated logging output determined to be anomalous. Where no anomaly is determined at step 712, the method proceeds to step 714 where the modification is committed for the current version to the code management system as part of a new version of the software code. Notably, the determination at step 712 can, in alternative embodiments, relate to a degree or extent of anomaly such that a threshold degree or extent of anomaly is used to determine if the modification should be committed at step 714.

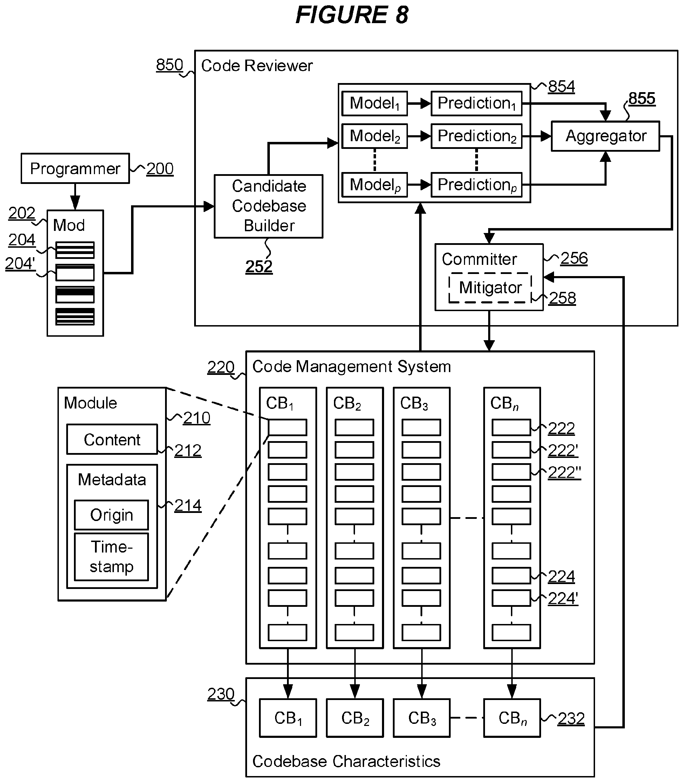

Figure 8 is a component diagram of a code reviewer 850 for use with a code management system 220 for the management of version-controlled software code in accordance with a fourth embodiment of the present invention. Many of the elements of Figure 8 are identical to those described above with respect to Figure 2 and these will not be repeated here.

The code reviewer 850 of Figure 8 includes a plurality of prediction models model₁ to model*ₚ*, each of which is configured to generate one or more predictions (prediction₁ to prediction*ₚ* accordingly) of one or more performance indications for the candidate codebase. While a single prediction is illustrated for each model in Figure 8, it will be appreciated by those skilled in the art that multiple predictions (such as predictions of multiple performance indications) can be generated by any or all models. The models are disparate in nature and/or disparate in configuration. For example, models include classifiers, logistic regression, anomaly detection, or other prediction models as will be apparent to those skilled in the art.

Each of the predictions prediction₁ to prediction*ₚ* for a candidate codebase are processed by an aggregator component 855 as a software, hardware, firmware or combination component. The aggregator 855 is configured to compare the generated predictions to identify common predictions arising from different ones of the prediction models for the candidate codebase. For example, the set of all predictions can be determined to include one or more subsets of identical or similar predictions that can be grouped together as common predictions. The common predictions being generated by each of disparate or disparately configured models are indicative of a greater degree of certainty of the predictions. The committer 256 thus operates on the basis of this improved certainty.

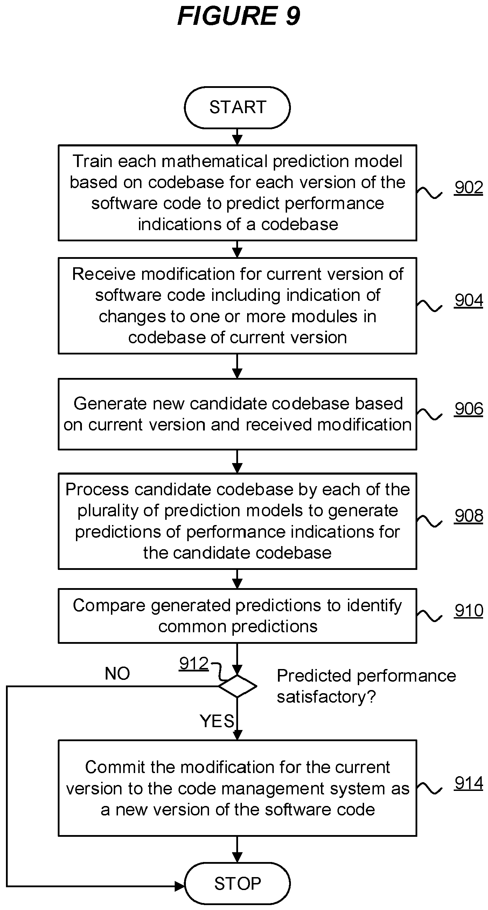

Figure 9 is a flowchart of a method of updating software code in a code management system 220 in accordance with the fourth embodiment of the present invention. Initially, at step 902, each of a plurality of mathematical prediction models is trained for a codebase for each version of the software code, and based on the one or more metrics of the codebase, to predict performance indications of a codebase. At step 904 the method receives a modification for the current version of the software code comprising an indication of changes to one or more modules in the codebase of the current version. At step 906 the method generates a new codebase as a candidate codebase based on a combination of a codebase for the current version and the received modification. At step 908 the method processes the candidate codebase by each of the plurality of prediction models to generate a plurality of predictions for one or more performance indications for the candidate codebase. At step 910 the method compares the generated predictions to identify common predictions arising from different ones of the prediction models for the candidate codebase. Based on a determination of acceptability of the common predictions at step 912, the method proceeds to step 914 where it commits the modification for the current version to the code management system as part of a new version of the software code.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of updating software code in a code management system, the code management system storing version-controlled software code including a current version and a plurality of historic versions of the code, each version of the software code having a codebase comprising a plurality of software modules and having associated codebase characteristics including one or more metrics for the codebase and one or more indications of a performance of the code in the codebase, the method comprising:
training each of a plurality of mathematical prediction models for a codebase for each version of the software code, and based on the one or more metrics of the codebase, to predict performance indications of a codebase;
receiving a modification for the current version of the software code comprising an indication of changes to one or more modules in the codebase of the current version;
generating a new codebase as a candidate codebase based on a combination of a codebase for the current version and the received modification;
processing the candidate codebase by each of the plurality of prediction models to generate a plurality of predictions for one or more performance indications for the candidate codebase;
comparing the generated predictions to identify common predictions arising from different ones of the prediction models for the candidate codebase; and
responsive to identified common predictions, committing the modification for the current version to the code management system as part of a new version of the software code.

2. The method of claim 1 wherein the one or more metrics for a codebase include one or more of: a cyclometric complexity for the codebase; a degree of replication of code in the codebase; a measure of conformance with one or more coding standards by code in the codebase; an extent to which code in the codebase is covered by software tests for the codebase; and a measure of Halstead complexity for the codebase.

3. The method of any preceding claim wherein the one or more indications of a performance of the code in a codebase include one or more of: a measure of a number of build warnings and/or errors for the codebase when subjected to a build process to compile and link code in the codebase; a measure of a number of runtime warnings and/or errors for software in execution being built from code in the codebase; a measure of seriousness of warnings and/or errors when subjected to a build process to compile and link code in the codebase; and a measure of seriousness of warnings and/or errors for software in execution being built from code in the codebase.

4. The method of any preceding claim wherein the modification is received from an automated code generation facility.

5. The method of any preceding claim further comprising, responsive to identified common predictions:
identifying one or more software modules changed by the received modification; and
inserting or configuring a monitoring component for use in or with the new version of the software code to monitor performance of the identified changed software modules in execution of software built from a codebase for the new version.

6. The method of any preceding claim further comprising, responsive to identified common predictions:
identifying one or more software modules changed by the received modification; and
providing or activating test software components to test the identified changed software modules.

7. A computer system including a processor and memory storing computer program code for performing the steps of the method of any preceding claim.

8. A computer program element comprising computer program code to, when loaded into a computer system and executed thereon, cause the computer to perform the steps of a method as claimed in any of claims 1 to 6.
